Europäisches Patentamt

European Patent Office

Office européen des brevets

(11) Veröffentlichungsnummer: **0 232 448 B1**

# EUROPÄISCHE PATENTSCHRIFT

(45) Veröffentlichungstag der Patentschrift: **27.11.91**

(51) Int. Cl.⁵: **B01D 24/38**

(21) Anmeldenummer: **86103112.8**

(22) Anmeldetag: **08.03.86**

(54) **Drainagerohr für eine rückspülbare Drainagerohr-Filteranlage.**

(30) Priorität: **11.02.86 CH 539/86**

(43) Veröffentlichungstag der Anmeldung:
**19.08.87 Patentblatt 87/34**

(45) Bekanntmachung des Hinweises auf die
Patenterteilung:
**27.11.91 Patentblatt 91/48**

(84) Benannte Vertragsstaaten:
**AT BE DE FR GB IT NL**

(56) Entgegenhaltungen:
**EP-A- 0 040 257
CH-A- 298 867
CH-A- 348 151
CH-A- 365 054**

(73) Patentinhaber: **GEBRÜDER SULZER AKTIENGE-
SELLSCHAFT
Zürcherstrasse 9
CH-8401 Winterthur(CH)**

(72) Erfinder: **Zefferer, Franz
Hofackerstr. 1
CH-85400 Sulz-Attikon(CH)**

## Beschreibung

Die Erfindung betrifft ein Drainagerohr für eine rückspülbare Drainagerohr-Filteranlage für die Wasseraufbereitung, wobei der Rohrboden mit mindestens einer in Richtung der Rohrlängsachse verlaufenden Reihe von Löchern und mit Auflagerippen versehen ist.

Ein Drainagerohr der vorstehend genannten Art ist bekannt aus der EP-A-0 040 257; eine Rückspülung von damit ausgerüsteten Filteranlagen erfolgt dadurch, dass Spülflüssigkeit und Spülluft nacheinander oder mehrfach alternierend durch das Drainagerohr in das aus einer körnigen Filtermasse bestehende Filterbett eingespeist werden. Eine gleichzeitige Rückspülung mit Flüssigkeit und Spülluft ist dabei nicht möglich.

Ein solches gleichzeitiges Spülen mit Flüssigkeit und Gas kann zwar in einer Drainagerohr-Filteranlage nach der EP-A-0 019 656 erfolgen. Hierzu ist es aber notwendig, die Rohre dieser Anlage mit einer Vielzahl von aufwendigen Düsen zu bestücken.

Aus der CH-A-298 867 ist eine Filteranlage bekannt, bei der ein Zwischenboden, der das körnige Filtermaterial trägt, mit Ausbuchtungen und drainagerohrartigen Hohlleisten versehen ist. In diesen Hohlleisten sind im oberen Drittel Öffnungen für den Austritt von Spülluft und darunter Öffnungen für den Durchtritt von Flüssigkeiten vorgesehen; die Spülluftöffnungen sind dabei so kalibriert, dass durch sie weder Flüssigkeiten noch Filtermaterial durchtreten kann. Bei dieser Konstruktion besteht daher die Möglichkeit, dass sich Teilchen der körnigen Filtermasse so vor die Spülluftöffnungen "legen", dass diese ganz oder teilweise verschlossen werden.

Aufgabe der Erfindung ist es, einerseits ein Drainagerohr für die genannten Filteranlagen zu schaffen, mit dem einerseits ein gleichzeitiges Spülen mit Spülluftflüssigkeit und -gas möglich ist, ohne dass dafür in die Drainagerohre kostspielige Düsen eingesetzt werden müssen, und andererseits ein Verschliessen einzelner Luftaustrittsöffnungen durch die aussen an das Drainagerohr anschliessende körnige Filtermasse zu verhindern.

Diese Aufgabe wird mit der Erfindung dadurch gelöst, dass im oberen Drittel des Rohres in Richtung seiner Längsachse an der Aussenseite des Rohres mindestens eine Längsnut angeordnet ist, in die Luftaustrittsöffnungen münden, deren Durchmesser der Breite der Längsnuten entspricht. Anzahl und Grösse der Luftaustrittsöffnungen, d.h. ihr Gesamtströmungsquerschnitt werden dabei so gewählt, dass sich bei einer gleichzeitigen Zuführung von Spülgas und -flüssigkeit im oberen Bereich der Drainagerohre ein Druckgaspolster ausbildet, aus dem das Spülgas durch die Öffnungen in die Filtermasse einströmt. Dieses Druckgaspolster bleibt während des Rückspülvorganges solange erhalten, wie eine Druckgaseinspeisung erfolgt. Das Druckgaspolster gewährleistet darüberhinaus eine gleichmässige Verteilung des Spülgases über die ganze Länge des Drainagerohres.

Das Einbringen des Spülgases kann - beispielsweise aus einem Sammelkanal für das Filtrat heraus, der senkrecht zu dem oder den Drainagerohren unter dem Boden des Filterbeckens verläuft - über ein Tauchrohr erfolgen, das neben dem nahe dem Boden des Drainagerohres endenden Anschlussrohr für den Filtratabzug in das Drainagerohr eingesetzt ist und oberhalb der Niveaulinie der Luftaustrittsöffnungen endet. Eine gleichmässige Verteilung des Spülgases über die Länge des erwähnten Sammelkanals lässt sich durch Aufbau eines zweiten Druckgaspolsters in diesem Kanal sicherstellen. Dafür ist es vorteilhaft, wenn das untere Ende des Tauchrohres strömungsdrosselnd ausgebildet und nahe der Decke des Sammelkanals für das Filtrat angeordnet ist.

Im folgenden wird die Erfindung anhand von Ausführungsbeispielen im Zusammenhang mit der Zeichnung näher erläutert.

Fig. 1     zeigt einen Schnitt I-I von Fig. 2 senkrecht zur Längsachse eines Drainagerohres;

Fig. 2     ist der Schnitt II-II von Fig. 1;

Fig. 3     gibt in gleicher Darstellung wie Fig. 1 eine Variante eines Drainagerohres wieder, während

Fig. 4     ein Schnitt durch ein Filterbecken ist, der parallel zur Längsachse der Drainagerohre verläuft.

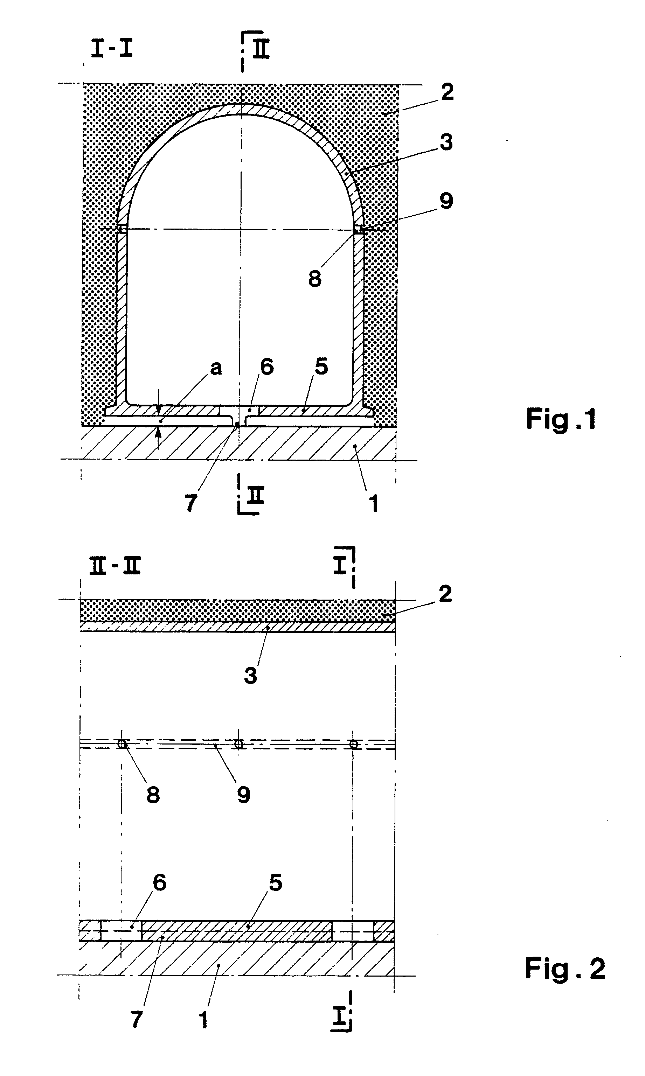

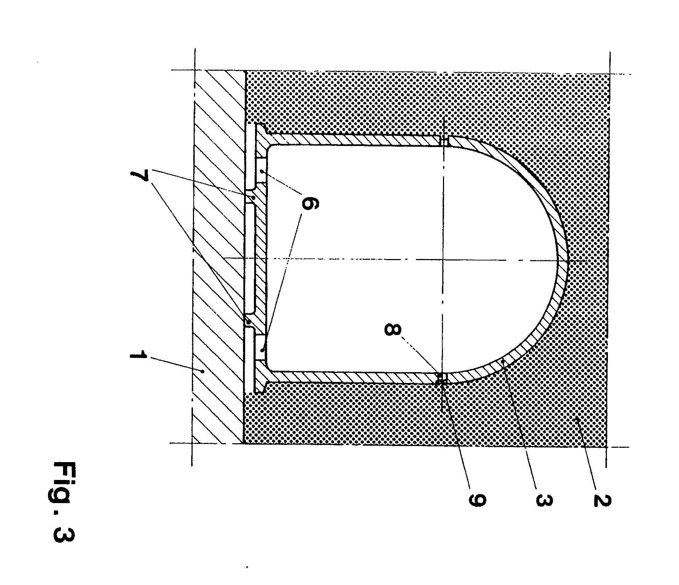

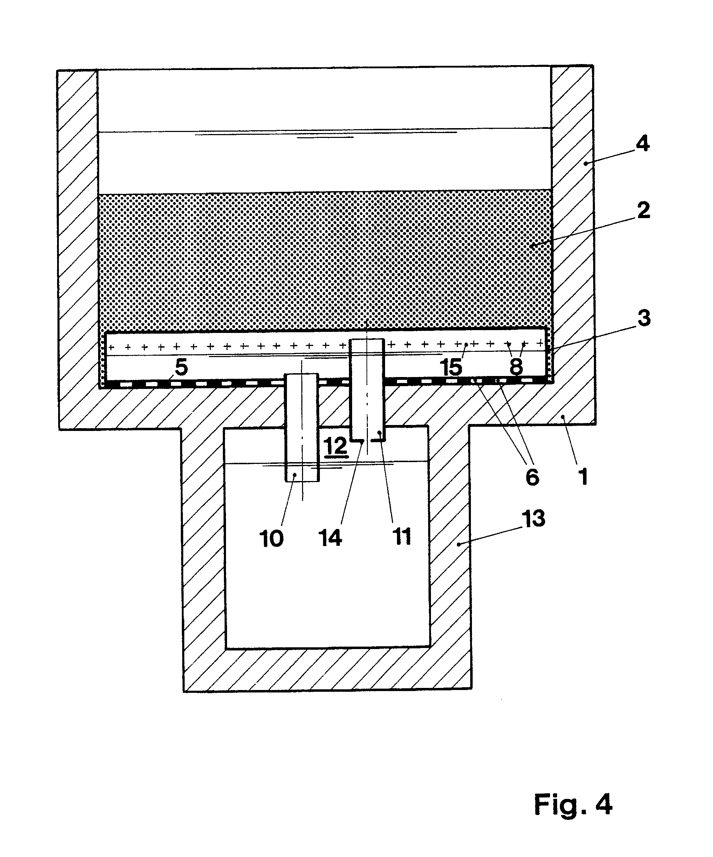

Ein erfindungsgemäss ausgebildetes Drainagerohr 3 ist auf dem Boden 1 eines Filterbeckens 4 (Fig. 4) abgestellt und beispielsweise durch im Boden 1 verankerte, nicht gezeigte Briden oder Rohrschellen fixiert. Das Rohr 3 hat einen rechteckigen Querschnitt, der nach oben durch eine gewölbte "Decke" abgeschlossen ist. Es ist eingebettet in eine körnige Filtermasse 2. Im Boden 5 des Rohres 3 sind in Richtung seiner Achse - bei Fig. 1 und 2 eine, bei Fig. 3 nahe der Seitenränder zwei - Reihen von Löchern 6 vorgesehen. In Längsrichtung des Rohres 3 sind zwischen oder seitlich neben diesen Löchern 6 Rippen 7 angeordnet, durch die der Boden 5 in einem Abstand a (Fig. 1) vom Boden 1 des Beckens 4 gehalten ist.

Die Höhe h dieses Abstandes ist auf die Körnung der die Drainagerohre 3 im Filterbecken 4 umgebenden Filtermasse 2 so abgestimmt, dass keine Körner in das Drainagerohr 3 gelangen können. Die Filtermasse 2 kann sowohl aus einem Material einheitlicher Körnung als auch, was nicht ausdrücklich gezeigt ist, unter Umständen aus einem relativ feinkörnigen ersten Material, dem eigentlichen Filtermaterial, und aus einer grobkörnigen Stützschicht bestehen, in die die Drainagerohre 3 eingebettet sind.

Durch den von körnigem Material 2 freien Abstand a und die Löcher 6 hindurch erfolgt im Filtrationsbetrieb die Drainage des Filtrates, im Spülbetrieb der Austritt des Spülwassers.

Nahe unterhalb der gewölbten Decke der Rohre 3 sind in beiden Seitenwänden in je einer, in Richtung der Rohrachse verlaufenden, Reihe Oeffnungen 8 angeordnet, aus denen im Spülbetrieb der Austritt der Spülluft erfolgt. Ein Verstopfen einzelner Löcher durch Körner der Filtermasse 2 verhindert eine den Oeffnungen 8 an der Aussenseite vorgelagerte Nut 9, die in ihrer Breite dem Durchmesser der Öffnungen entspricht; dieser ist ebenfalls geringer als die Korngröse des körnigen Filtermaterials in der Filtermasse 2.

Die Löcher 6 für den Wasserdurchtritt und die Öffnungen 8 für den Luftaustritt sind bezüglich Anzahl und Durchmesser derart aufeinander abgestimmt, dass während des Spülvorganges Luft und Wasser gleichzeitig aus den Drainagerohren 3 in die Filtermasse 2 austreten.

Fig. 4 zeigt ein Drainagerohr 3 in einem Filterbecken 4 während der Rückspülphase des Filters. Für das Wegführen des Filtrats während des Filterbetriebs und zur Zuführung der Spülmedien - Luft und Wasser - während des Rückspülens sind sämtliche Draingerohre 3 eines Beckens mit durch ihren Boden 5 geführten Rohren 10 und 11 versehen, die durch den Boden 1 des Filterbeckens 4 hindurch in einen Sammelkanal 13 führen. Der Sammelkanal 13 ist unter der Mitte der parallel zu den Drainagerohren verlaufenden Abmessung des Filterbeckens 4 angeordnet und erstreckt sich über die ganze Filterlänge. Er ist an nicht gezeigte Zuführleitungen für Spülluft und Rückspülwasser angeschlossen.

Das Anschlussrohr 10 endet nahe oder im Boden 5 des Drainagerohres 3 und ermöglicht einerseits den Abzug des Filtrates aus dem Rohr 3; andererseits speist es die Drainagerohre 3 aus dem Kanal 13 mit Spülwasser.

Der Einspeisung der Spülluft aus dem Kanal 13 in ein Drainagerohr 3 dient das Tauchrohr 11, das oberhalb dem Niveau der Luftaustrittsöffnungen 8 im Drainagerohr 3 endet. Es bzw. sein Strömungswiderstand sind mittels einer einstellbaren Drosselblende 14 so bemessen, dass der Druckabfall zur Bildung eines Luftgaspolsters 12 im Kanal 13 führt. Dieses Luftgaspolster sichert so eine gleichmässige Luftverteilung auf sämtliche Drainagerohre 3 über die gesamte Filterlänge eines Filterfeldes.

Der Druckverlust an den Luftaustrittsöffnungen 8 eines Drainagerohres 3 führt ebenfalls zur Bildung eines Luftgaspolsters 15 innerhalb des Drainagerohres 3 und gewährleistet damit einen gleichförmigen Luftaustritt über die gesamte Rohrlänge bzw. Filterbreite.

Wasser und Luft treten durch die Löcher 6 bzw. die Oeffnungen 8 gleichzeitig in die Filtermasse aus und spülen diese von ausfiltrierten Verunreinigungen frei.

## Patentansprüche

1. Drainagerohr (3) für eine rückspülbare DrainagerohrFilteranlage für die Wasseraufbereitung, wobei der Rohrboden (5) mit mindestens einer in Richtung der Rohrlängsachse verlaufenden Reihe von Löchern (6) und mit Auflagerippen (7) versehen ist, dadurch gekennzeichnet, dass im oberen Drittel des Rohres (3) in Richtung seiner Längsachse an der Aussenseite des Rohres (3) mindestens eine Längsnut (9) angeordnet ist, in die Luftaustrittsöffnungen (8) münden, deren Durchmesser der Breite der Längsnuten (9) entspricht.

2. Filteranlage mit einem Drainagerohr nach Anspruch 1, dadurch gekennzeichnet, dass neben einem nahe dem Boden (5) des Drainagerohres (3) endenden, in einen unter dem Filterboden (1) angeordneten Sammelkanal (13) führenden Anschlussrohr (10) für den Filtratabzug ein Tauchrohr (11) in das Drainagerohr (3) eingesetzt ist, das oberhalb der Niveaulinie der Luftaustrittsöffnungen (8) endet.

3. Filteranlage mit einem Drainagerohr nach Anspruch 1 oder 2, dadurch gekennzeichnet, dass das untere Ende des Tauchrohres (11) strömungsdrosselnd ausgebildet und nahe der Decke des Sammelkanals (13) für das Filtrat angeordnet ist.

## Claims

1. A drainage tube (3) for a backwashable drainage tube filter installation for water treatment, in which the base (5) of the tube is provided with at least one row of holes (6) extending in the direction of the tube longitudinal axis and with supporting ribs (7), characterised in that at least one longitudinal groove (9) is disposed in the top third of the tube (3) on the outside thereof in the direction of its longitudinal axis, into which longitudinal groove there lead air outlet apertures (8) of a diameter corresponding to the width of the longitudinal grooves (9).

2. A filter installation with a drainage tube according to claim 1, characterised in that an immersion tube (11) is inserted into the drainage tube (3) next to a junction tube (10) for the removal of filtrate, said junction tube terminating near the base (5) of the drainage tube (3) and leading into a collecting duct (13) disposed beneath the filter bed (1), said immersion tube (11) terminating above the line of the level of the air outlet apertures (8).

3. A filter installation with a drainage tube according to claim 1 or 2, characterised in that the bottom end of the immersion tube (11) is constructed so as to restrict the flow and is disposed near the top of the collecting duct (13) for the filtrate.

**Revendications**

1. Tube de drainage (3) pour installation de filtration comprenant des tubes de drainage se lavant à contre-courant et destinée au traitement de l'eau, le fond (5) des tubes comprenant au moins une rangée de trous (6) orientée dans la direction de l'axe longitudinal des tubes, ainsi que des nervures d'appui (7), caractérisé en ce qu'au moins une rainure longitudinale (9), dans laquelle débouchent des ouvertures (8) de sortie d'air dont le diamètre correspond à la largeur des rainures (9), est réalisée sur le côté extérieur du tube (3), dans le tiers supérieur de ce dernier, dans la direction de son axe longitudinal.

2. Installation de filtration comprenant un tube de drainage selon la revendication 1, caractérisée en ce qu'un tube plongeur (11), qui aboutit au-dessus de la ligne de niveau des ouvertures de sortie d'air (8), est installé dans le tube de drainage (3) à côté d'un tube de raccord (10) destiné à l'évacuation du filtrat, aboutissant à proximité du fond (5) du tube de drainage (3) et menant dans un canal collecteur (13) disposé sous le fond (1) du filtre.

3. Installation de filtration équipée d'un tube de drainage selon la revendication 1 ou 2, caractérisée en ce que l'extrémité inférieure du tube plongeur (11) est conformée de manière à étrangler l'écoulement et est disposée à proximité du toit du canal (13) collecteur du filtrat.

I-I

II

2

3

9

8

a    6    5

Fig.1

7    II    1

II-II    I

2

3

8    9

6    5

Fig.2

7    1

**Fig. 3**

Fig. 4